Europäisches Patentamt

European Patent Office

Office européen des brevets

(19)

(11) Veröffentlichungsnummer : **0 093 426**
**B1**

(12) **EUROPÄISCHE PATENTSCHRIFT**

(45) Veröffentlichungstag der Patentschrift :
29.07.87

(21) Anmeldenummer : 83104223.9

(22) Anmeldetag : 29.04.83

(51) Int. Cl.⁴ : **B 01 D 53/34**, B 01 D 53/14,
F 24 F 3/16

(54) Verfahren und Vorrichtung zum Reinigen der Luft von Cyanacrylat-Dämpfen.

(30) Priorität : 30.04.82 DE 3216252

(43) Veröffentlichungstag der Anmeldung :
09.11.83 Patentblatt 83/45

(45) Bekanntmachung des Hinweises auf die Patenterteilung : 29.07.87 Patentblatt 87/31

(84) Benannte Vertragsstaaten :
CH FR GB LI

(56) Entgegenhaltungen :
DE-A- 2 136 197
FR-A- 2 150 966
US-A- 1 814 028
US-A- 1 976 401

(73) Patentinhaber : **LOCTITE Deutschland GmbH**
**Arabellastrasse 5**
**D-8000 München 81 (DE)**

(72) Erfinder : **Grün, Heinrich**
**Liebauerstrasse 35**
**D-8000 München 81 (DE)**
Erfinder : **Megerlin, Joachim**
**Saarlandstrasse 19**
**D-8011 Neukäferloh (DE)**
Erfinder : **Svenson, Erwin**
**Quiddestrasse 16**
**D-8000 München 83 (DE)**
Erfinder : **Holzhauser, Karl**
**Belgradstrasse 56**
**D-8000 München 40 (DE)**

(74) Vertreter : **Abitz, Walter, Dr.-Ing. et al**
**Abitz, Morf, Gritschneder, Freiherr von Wittgenstein**
**Postfach 86 01 09**
**D-8000 München 86 (DE)**

EP 0 093 426 B1

## Beschreibung

Die Erfindung betrifft ein Verfahren und eine Vorrichtung zum Reinigen der Luft von Cyanacrylat-Dämpfen, die aus kleinsten Tröpfchen oder Aerosolen von 1 μm Durchmesser oder weniger bestehen und bei der Verarbeitung von Cyanacrylat-Produkten entstehen. Diese Teilchen oder Aerosole halten sich schwebend in der Luft. Je höher die Umgebungstemperatur und je kleiner die relative Luftfeuchtigkeit ist, um so mehr Cyanacrylat-Dämpfe können entweichen, was an dem in der Nähe der Klebestellen sich bildenden Nebel oder weißem Niederschlag erkennbar ist.

Cyanacrylat-Dämpfe können eine Gesundheitsgefahr darstellen und Schleimhautreizungen der Atmungsorgane oder starke Augenreizungen hervorrufen.

Es ist zwar möglich, derartige Cyanacrylat-Dämpfe abzusaugen und ins Freie zu leiten, derartige Anlagen erfordern jedoch längere Luftschächte und sind daher teuer. Außerdem erzeugen derartige Luftschächte starke Strömungsgeräusche.

Durch die in den Ansprüchen angegebene Lösung wird die Aufgabe gelöst, ein Verfahren und eine Vorrichtung zum Reinigen der Luft von Cyanacrylat-Dämpfen zu schaffen, die keine aufwendigen Rohrschächte zum Absaugen der Luft erfordern.

Mittels des bei dem erfindungsgemäßen Verfahren verwendeten Naßfilters kann zugleich die Luftfeuchtigkeit reguliert werden, da die Luft in den Raum zurückgeführt werden kann, so daß günstige Luft- und Aushärtebedingungen für die Verarbeitung von Cyanacrylat-Klebern geschaffen werden. Die durch Cyanacrylsäureester verursachte Geruchsbelästigung wird neutralisiert. Da die erfindungsgemäße Vorrichtung nur sehr kurze Absaugschläuche aufweist, ist die Lärmbelästigung gering. Aufgrund ihres einfachen Aufbaus kann sie unter schiedlichen Arbeitsplätzen angepaßt werden.

Bei dem erfindungsgemäßen Verfahren werden die Cyanacrylatdämpfe durch die in dem Naßfilter vorhandene Feuchtigkeit polymerisiert und bleiben dadurch in dem Naßfilter hängen. Das Naßfilter kann ein einfacher Schwamm, eine Matte oder ein Schaumstoffilterband sein.

Ein Ausführungsbeispiel der erfindungsgemäßen Vorrichtung wird anhand der Zeichnung nachfolgend genauer beschrieben. Es zeigen:

Figur 1 die Vorrichtung zum Reinigen der Luft von Cyanacrylat-Dämpfen im Schnitt;

Figur 2 die Arbeitsplatzgestaltung bei Verwendung einer Vorrichtung gemäß Fig. 1;

Figur 3 und Figur 4 ein anderes Ausführungsbeispiel der Vorrichtung zum Reinigen der Luft von Cyanacrylat-Dämpfen im Schnitt und

Figur 5 die Gestaltung des Arbeitsplatzes und des Aushärteplatzes bei Verwendung einer Vorrichtung gemäß den Figuren 3 und 4.

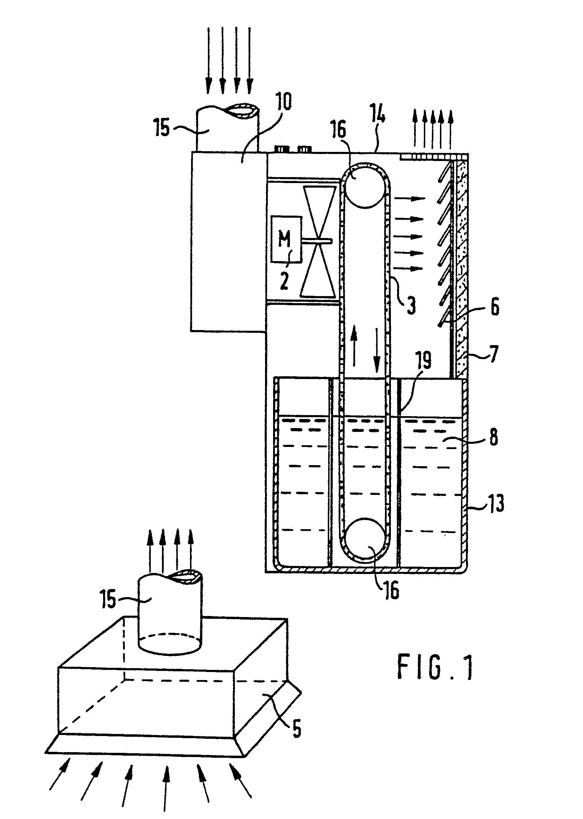

Die in Fig. 1 gezeigte Vorrichtung ähnelt weitgehend einem im Handel erhältlichen Luftbefeuchter. Sie besteht aus einem kastenförmigen Gehäuse 13. Im unteren Bereich des Gehäuses 13 befindet sich ein Wasserbad 8. In dem Gehäuse 13 befinden sich ferner unten und oben zwei parallel angeordnete, rotierende Walzen 16, um die ein Filterband 3 aus Schaumstoff läuft, das das Naßfilter darstellt. Die untere Walze 16 hängt lose in dem Filterband 3 und ist nur durch die seitlichen Wände des Wassertrogs und von diesen abstehenden Schienen 19 festgelegt. Sie befindet sich in dem Wasserbad 8, so daß das Filterband 3 ständig mit Wasser benetzt wird. Die obere Walze 16 ist etwa senkrecht über der unteren Walze 16 angeordnet, so daß das Filterband 3 in vertikaler Richtung angetrieben wird.

Über eine Absaughaube 5, einen Absaugschlauch 15 und ein Gebläse 2 werden die Cyanacrylat-Dämpfe von dem Arbeitsplatz abgesaugt und auf den sich über dem Wasserspiegel befindenden Teil des Filterbandes 3 gerichtet und durch dieses hindurchgeblasen. Die Cyanacrylat-Dämpfe werden dabei durch die Feuchtigkeit des Filterbandes 3 neutralisiert und schlagen sich auf diesem nieder. Das Filterband 3 wird vorzugsweise so angetrieben, daß sich der Teil des Filterbandes 3 nach oben bewegt, den die abgesaugte Luft zuerst durchströmt, damit die Cyanacrylat-Dämpfe durch den am stärksten mit Wasser getränkten Teil des Filterbandes möglichst vollständig neutralisiert werden.

Soweit die Vorrichtung bisher beschrieben wurde, ähnelt sie weitgehend den im Handel erhältlichen Luftbefeuchtungsgeräten. Während jedoch bei diesen Luftbefeuchtungsgeräten die Gebläseleistung und die Geschwindigkeit des Filterbandes in Abhängigkeit von der gemessenen Luftfeuchtigkeit gesteuert werden, wird bei der in der Zeichnung dargestellten Ausführungsform die Gebläseleistung und die Geschwindigkeit des Filterbandes 3 so eingestellt, daß die Cyanacrylat-Dämpfe von dem betreffenden Arbeitsplatz vollständig abgesaugt werden und in dem Filterband 3 vollständig neutralisiert werden. Da jedoch beim Arbeiten mit Cyanacrylat-Klebern eine relative Luftfeuchtigkeit zwischen 50 und 60 % eingehalten werden soll, weist die Vorrichtung vorzugsweise zusätzlich Einrichtungen zur Steuerung der relativen Feuchtigkeit der die Vorrichtung verlassenden Luft auf. Dazu sind abstromseitig von dem umlaufenden Filterband 3 Ablenklamellen 6 angeordnet, die im geschlossenen Zustand keine Luft durchlassen, so daß diese nach oben aus dem Gehäuse 13 entweicht, dabei eine sehr hohe relative Feuchtigkeit aufweist und die relative Luftfeuchtigkeit im Raum erhöht. Sind die Ablenklamellen 6 geöffnet, so wird die das Filterband 3 verlassende Luft durch ein weiteres, quer zum Luftstrom angeordnetes Filtersieb 7 geleitet, in dem der Abluft ein Teil ihrer Feuchtigkeit entzogen wird. Durch die Einstellung der Ablenklamellen 6 kann somit die relative Luftfeuchtigkeit der Abluft gesteuert werden.

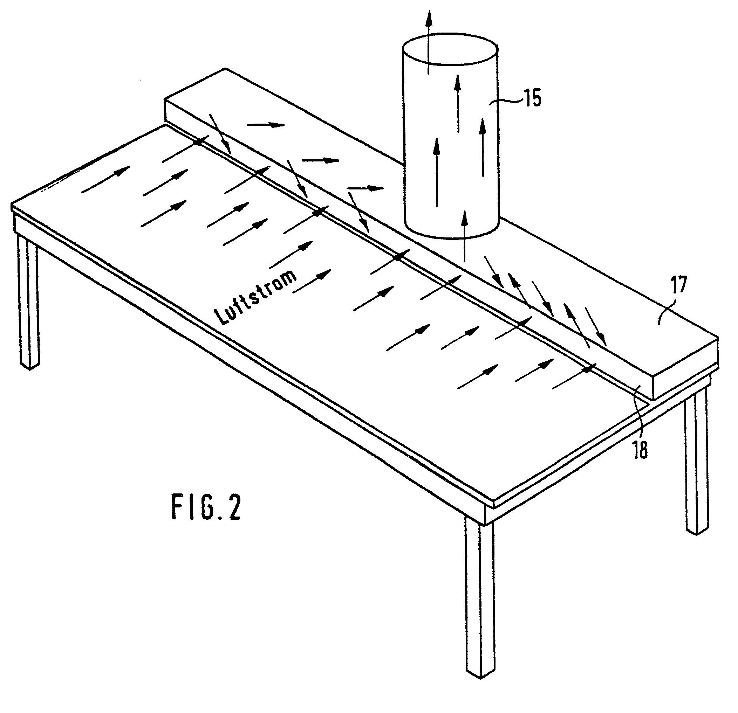

Fig. 2 zeigt die Arbeitsplatzgestaltung in Verbindung mit der erfindungsgemäßen Vorrichtung. Anstelle der in Fig. 1 gezeigten Absaughaube 5 ist entlang einer Längsseite des Arbeitstisches eine Absaugleiste 17 mit einer sich über den gesamten Tisch erstreckenden Absaugöffnung 18 vorgesehen, die mit dem Absaugschlauch 15 in Verbindung steht. Die Cyanacrylat-Dämpfe werden daher auf kürzestem Weg vom Arbeitsplatz abgesaugt und in der in Fig. 1 gezeigten Vorrichtung neutralisiert.

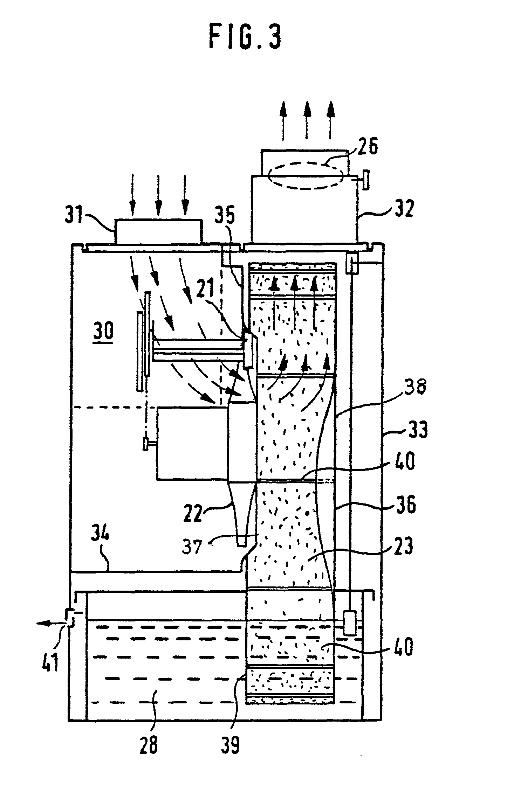

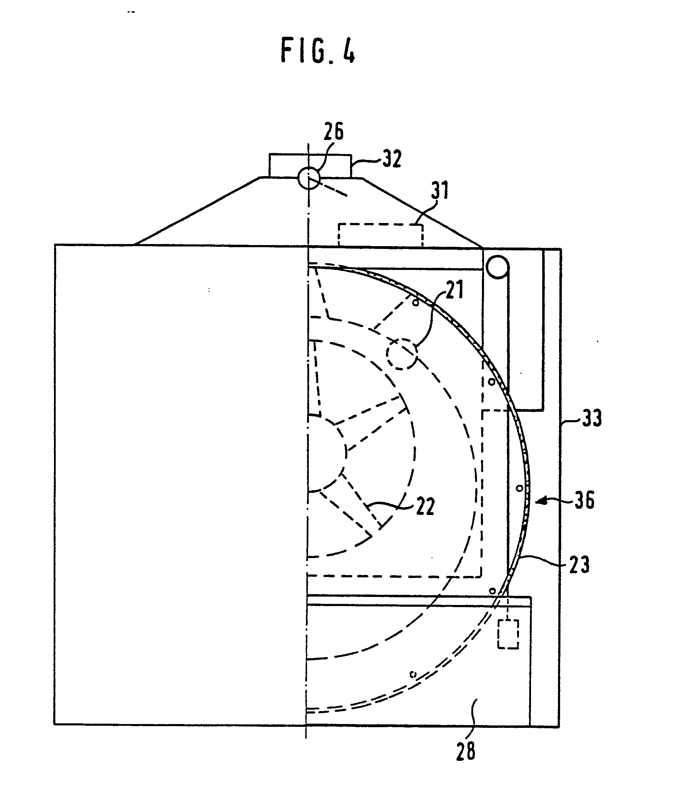

Die Figuren 3 und 4 zeigen ein anderes Ausführungsbeispiel der Vorrichtung zum Reinigen der Luft von Cyanacrylat-Dämpfen. Der Vorteil besteht dabei insbesondere darin, daß das Gehäuse 33 durch Trennwände so unterteilt ist, daß beim Umstürzen der Vorrichtung nicht die Gefahr besteht, daß die stromführenden Teile unter Wasser gesetzt werden. Durch eine waagrecht verlaufende Trennwand 34 und eine senkrecht verlaufende Trennwand 35 wird dazu innerhalb des Gehäuses 33 eine Ansaugkammer 30 gebildet, in der sich das Gebläse 22 mit dem Elektromotor befindet. Die waagrechte Trennwand 34 liegt bei etwa ein Drittel der Höhe des Gehäuses 33 und die senkrechte Trennwand 35 liegt etwa in der Mitte des Gehäuses 33. Unterhalb der waagrechten Trennwand 34 befindet sich das Wasserbad 28.

Die Trennwände 34, 35 grenzen die Ansaugkammer 30 ab. An der oberseite besitzt die Ansaugkammer 30 einen Einlaß 31, durch den mittels des ebenfalls in der Ansaugkammer angeordneten Gebläse 22 Luft angesaugt wird. Das Gebläse 22 drückt die Luft durch eine in der senkrechten Trennwand 35 vorgesehene Öffnung 37 in den Hauptteil des Gehäuses 33. In diesem Hauptteil des Gehäuses 33 ist eine Trommel 36 drehbar angeordnet. Die Trommel 36 taucht in das Wasserbad 28 ein und die zylindrische Mantelfläche der Trommel 36 bildet das Nassfilter zur Neutralisierung der Cyanacrylat-Dämpfe. Die Trommel 36 besteht aus einem kreisförmigen Boden 38 und einer Ringscheibe 39, die am Umfang in regelmäßigen Abständen durch Abstandhalter 40 miteinander verbunden sind. Über diese Abstandhalter 40 ist das Filterband 23, das das Nassfilter bildet, gezogen. Der kreisförmige Boden 38 und die Ringscheibe 39, sowie die Abstandhalter 40 bestehen zweckmäßigerweise aus rostfreiem Material. Die Drehachse der Trommel 36 liegt waagrecht und die Trommel 36 ist so angeordnet, daß die aus der Öffnung 37 der senkrechten Trennwand 35 austretende Luft unmittelbar durch die Ringscheibe 39 in die Trommel eintritt. Die Luft wird durch das Filterband 23 gedrückt, wobei die Cyanacrylat-Dämpfe neutralisiert werden, und entweicht dann durch einen Auslass 32 an der Oberseite des Gehäuses 33. Die Trommel 36 ist mit dem Innenrand der Ringscheibe 39 auf zwei Rollen oder Rillenrädern 21 gelagert. Die Rollen 21 haben eine sehr tiefe, umlaufende Rille, so daß die Trommel 36 sicherer geführt wird. Eine oder beide der Rollen 21 wird über einen Riemen oder eine sonstige Verbindung von dem Motor des Gebläses 22 angetrieben. in Fig. 4 ist nur eine Rolle 21 dargestellt. Die zweite Rolle 21 ist spiegelbildlich zur senkrechten Mittellinie in der verdeckten (linken) Hälfte angeordnet. Wie in Fig. 3 erkennbar, ist der Rand der Öffnung 37 leicht trichterförmig und abgerundet ausgebildet, um den Srtrömungswiderstand zu verringern.

Im Stutzen des Auslasses 32 befindet sich eine Luftdrosselklappe 26 zur Steuerung der durch den Auslass 32 austretenden Luft. Damit auch bei geschlossener Drosselklappe 26 die Acrylat-Dämpfe enthaltende Luft angesaugt wird, befindet sich im unteren Bereich des Gehäuses 33 eine zusätzliche Auslassöffnung 41, über die bei geschlossener Drosselklappe 26 die Luft nach Durchtritt durch das Filterband 23 ausströmen kann. in der Auslassöffnung 41 kann ein Filtersieb angeordnet sein, das die Luftfeuchtigkeit der hier austretenden Luft reguliert. Ausserdem können in der Auslassöffnung 41 verstellbare Ablenklamellen vorgesehen sein.

Es ist ferner eine Einrichtung vorgesehen, die entweder anzeigt, wenn der Wasserspiegel im Wasserbad 28 unter einen kritischen Wert sinkt, oder automatisch den Wasserspiegel auf einem bestimmten Niveau hält.

Da die Trommel 26 nur auf den Rollen 21 gelagert ist, kann die Trommel 36 nach öffnen der Oberseite des Gehäuses 33 besonders einfach und ohne umständliche Manipulationen aus dem Gehäuse 33 herausgenommen werden, um z. B. das Filterband 23 zu erneuern. Zum Nachfüllen des Wassers genügt es die Oberseite des Gehäuses 33 zu öffnen. Die Trommel 36 muß dazu nicht herausgenommen werden. Da das Gebläse in der Ansaugkammer 30 geschützt angeordnet ist, besteht nicht die Gefahr, daß das Wasser spannungführende Teile erreicht.

Cyanacrylat-Dämpfe entwickeln sich sowohl beim Auftragen des Klebers auf die Werkstücke selbst als auch anschliessend beim Aushärten der Klebestelle nach dem Zusammenfügen der zu verklebenden Teile. über Verbindungsschläuche wird daher die Luft sowohl vom Arbeitsplatz als auch von dem meist benachbarten Aushärteplatz abgesaugt. Die Verbindungsschläuche führen zum Einlaß 31 der in Fig. 3 gezeigten Vorrichtung. Zweckmäßigerweise wird über einen weiteren Verbindungsschlauch die Abluft der Vorrichtung vom Auslass 32 direkt zum Arbeitsplatz geführt. Dies hat den Vorteil, daß am Arbeitsplatz Luft mit der geeigneten relativen Feuchtigkeit zur Verfügung steht. Die Luftfeuchtigkeit wird dabei durch die Drosselklappe 26 eingestellt. Durch Schließen der Drosselklappe 26 wird die zugeführte Luftmenge verkleinert, wodurch dann am Arbeitsplatz die Luftfeuchtigkeit sinkt, während durch Öffnen der Drosselklappe 26 die Luftfeuchtigkeit am Arbeitsplatz erhöht wird, da die Abluft der Vorrichtung dadurch, daß sie durch das Filterband 23 tritt, eine sehr hohe Luftfeuchtigkeit besitzt. Zur Vermeidung eines Überdruckes in der Vorrichtung bei geschlossener Drosselklappe 26 und um die Absaugung der Cyanacrylat-Dämpfe auch bei geschlossener Drosselklappe 26 sicherzustellen, enthält das Gehäuse 33 noch die zusätzliche Auslaßöffnung 41, durch die die von Cyanacrylat-Dämpfe befreite Luft in den Raum entweicht.

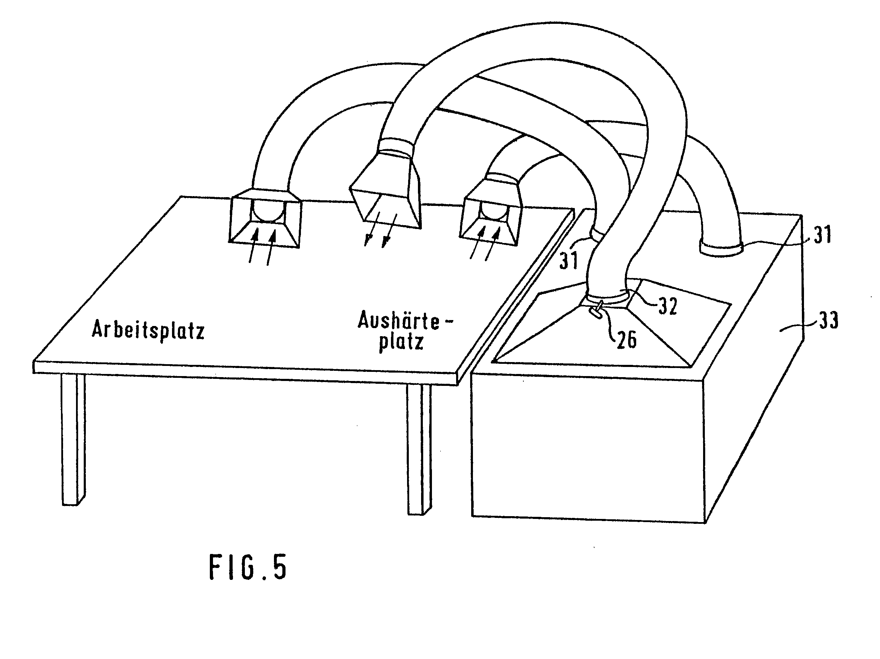

Fig. 5 zeigt die Anordnung der Vorrichtung zum Reinigen der Luft von Cyanacrylat-Dämpfen in Verbindung mit einem Arbeitsplatz. Über Luftschläuche wird die Cyanacrylat-Dämpfe enthaltende Luft sowohl vom Arbeitsplatz selbst als auch von dem in der Nähe befindlichen Aushärteplatz abgesaugt und über die beiden Einlässe 31 der Vorrichtung zugeführt. Über den Auslass 32 wird die gereinigte und angefeuchtete Luft dem Arbeitsplatz wieder zugeführt.

Beispiel

Das Gehäuse 1 hat eine Höhe von 600 mm, eine Breite von 566 mm und eine Tiefe von 360 mm. Das Wasserbad befindet sich in einem Edelstahl-Behälter und faßt max. 30 Liter Die Trommel 36 hat einen Durchmesser von 520 mm und dreht sich mit 0,8 Umdrehungen pro Minute, so daß das Filterband 23 eine Geschwindigkeit von 130 cm/min. aufweist. Bei der Auslassöffnung 41 sind Ablenklamellen senkrecht übereinander angeordnet, die die überschüssige Luft ableiten. In der Auslassöffnung 41 ist zur Regulierung der Luftfeuchtigkeit ein Filtersieb angeordnet.

**Patentansprüche**

1. Verfahren zum Reinigen der Luft von Cyanacrylat-Dämpfen, dadurch gekennzeichnet, daß die Luft durch ein Naßfilter gesaugt oder gedrückt wird.

2. Verfahren nach Anspruch 1, dadurch gekennzeichnet, daß die Luft nach Durchströmen des Naßfilters durch ein weiteres Filter zur Verringerung der Feuchtigkeit strömt, wobei der durch das weitere Filter strömende Anteil in Abhängigkeit von der relativen Luftfeuchtigkeit der Raumluft gesteuert wird.

3. Verfahren nach Anspruch 1, dadurch gekennzeichnet, daß die Luft von einem Arbeitsplatz abgesaugt wird, an dem Cyanacrylat-Kleber verwendet werden, und daß die Luft nach Durchströmen des Nassfilters mit einem bestimmten Anteil wieder dem Arbeitsplatz zugeführt wird, wobei der Anteil der zurückgeführten Luft so gesteuert wird, daß sich am Arbeitsplatz eine Luftfeuchtigkeit zwischen 50 und 60 % ergibt.

4. Vorrichtung zur Durchführung des Verfahrens nach einem der Ansprüche 1 bis 3 mit einem Gebläse (2), das über einen Absaugschlauch (15) Cyanacrylat-Dämpfe enthaltende Luft ansaugt, und mit einem endlosen Filterband (3), das um zwei Walzen (16) läuft und quer zu dem durch das Gebläse (2) erzeugten Luftstrom angeordnet ist, wobei eine der Walzen (16) in ein Wasserbad (8) eintaucht, gekennzeichnet durch Ablenklamellen (6), die den Luftstrom nach Durchströmen des Filterbandes (3) zur Verminderung der Feuchtigkeit durch ein weiteres Filter (7) lenken, wobei durch Einstellung der Ablenklamellen (6) der durch das weitere Filter (7) strömende Anteil des Luftstromes einstellbar ist.

5. Vorrichtung zur Durchführung des Verfahrens nach einem der Ansprüche 1 bis 3 mit einem Gebläse (22), das über einen Absaugschlauch Cyanacrylat-Dämpfe enthaltende Luft ansaugt, dadurch gekennzeichnet, daß ein Gehäuse (33) durch Trennwände (34, 35) in zwei Kammern unterteilt ist, wobei in der einem Kammer (Ansaugkammer 30) das Gebläse (22) angeordnet ist und in der anderen Kammer das Wasserbad (28) und eine um eine horizontale Achse drehende Trommel (36) angeordnet ist, die teilweise in das Wasserbad (28) eintaucht und deren zylindrische Umfangsfläche von einem Filterband (23) gebildet wird, wobei die Cyanacrylat-Dämpfe enthaltende Luft durch eine Öffnung (37) der Trennwand axial in die Trommel (36) gedrückt wird, so daß sie radial durch das Filterband (23) austritt.

**Claims**

1. A process for cleaning air of cyanoacrylate vapors, characterized in that the air is aspirated or pressed through a wet filter.

2. A process according to claim 1, characterized in that the air, after having passed through the wet filter, flows through a further filter to reduce humidity, the proportion flowing through the further filter being controlled in response to the relative humidity of the ambient air.

3. A process according to claim 1, characterized in that the air is aspirated from an operating position, at which cyanoacrylate adhesives are being used, and in that, the air having passed through the wet filter, a certain proportion thereof is returned again to the operating position, the proportion of the returned air being controlled in a manner such that there results at the operating position a humidity of air between 50 and 60 %.

4. An apparatus for carrying through the process according to one of claims 1 to 3, comprising a ventilator (2), which through an aspiration tube (15) aspirates air containing cyanoacrylate vapors, and comprising a continuous filter band (3), which moves about two rollers (16) and is disposed transversely to the air stream produced by the ventilator (2), one of said rollers (16) being immersed in a water bath (8), characterized by deflection lamellae (6), which direct the air stream, after it has passed through said filter band (3), through a further filter (7) so as to reduce the humidity, the proportion of the air stream flowing through said further filter (7) being adjustable through the setting of the deflection lamellae (6).

5. An apparatus for carrying through the process according to one of claims 1 to 3, comprising a ventilator (22), which through an aspirating tube aspirates air containing cyanoacrylate vapors, characterized in that a housing (33) is divided through partition walls (34, 35) into two chambers, the ventilator (22) being arranged in the one chamber (aspirating chamber 30), and said water bath (28) and a drum (36) rotating about a horizontal axis being arranged in said other chamber, said drum being in part immersed in said water bath (28) and the cylindrical peripheral surface of said drum being defined by a filter band (23), the air containing the cyanoacrylate vapors being pressed axially into said drum (36) through an opening (37) in said partition wall, so that it exits radially through said filter band (23).

## Revendications

1. Procédé pour épurer l'air de vapeurs de cyanacrylate, caractérisé en ce qu'on fait passer l'air à travers un filtre humide, par aspiration ou pression.

2. Procédé suivant la revendication 1, caractérisé en ce que pour réduire l'humidité de l'air à la sortie du filtre humide, on le fait passer à travers un second filtre, la proportion du courant d'air à traiter dans le second filtre étant réglée en fonction de l'humidité relative de l'air ambiant.

3. Procédé suivant la revendication 1, caractérisé en ce qu'on aspire l'air à traiter à l'endroit d'un poste de travail utilisant un adhésif au cyanacrylate, et en ce qu'on renvoie au poste de travail une certaine proportion du courant d'air ayant passé par le filtre humide, la proportion d'air renvoyé étant réglée de manière à ce que l'humidité de l'air soit entre 50 et 60 % à l'endroit du poste de travail.

4. Dispositif pour la réalisation du procédé suivant l'une des revendications 1 à 3, comportant un ventilateur (2) qui aspire l'air chargé de vapeurs de cyanacrylate à travers un conduit d'aspiration (15), et une bande filtrante sans fin (3) montée sur deux rouleaux de renvoi tournants (16), et disposée en travers du courant d'air produit par le ventilateur (2), l'un des rouleaux de renvoi (16) étant immergé dans un bain d'eau (8), caractérisé par des lames déflectrices (6) qui, pour réduire l'humidité du courant d'air après son passage à travers la bande filtrante (3), le font passer dans un second filtre (7), l'inclinaison des lames déflectrices (6) permettant de régler la proportion du courant d'air qui passe à travers le second filtre (7).

5. Dispositif pour la réalisation du procédé suivant l'une des revendications 1 à 3, comportant un ventilateur (22), aspirant l'air chargé de vapeurs de cyanacrylate à travers un conduit d'aspiration, caractérisé en ce qu'il comporte une enceinte (33) divisée en deux chambres par des cloisons de séparation (34, 35), le ventilateur (22) étant disposé dans l'une de ces chambres (chambre d'aspiration 30), l'autre chambre contenant le bain d'eau (28) et un tambour tournant (36) d'axe horizontal, immergé en partie dans ce bain d'eau (28), et la surface cylindrique périphérique de ce tambour étant formée d'une bande de filtrage (23), l'air chargé de vapeurs de cyanacrylate étant poussé axialement dans le tambour (36) à travers une ouverture (37) de la cloison de séparation, pour en ressortir radialement à travers la bande de filtrage (23).

FIG.1

Luftstrom

15

17

18

FIG.2

# FIG.3

# FIG. 4

FIG.5

Arbeitsplatz

Aushärteplatz

31

31

32

26

33

0 093 426